Europäisches Patentamt

European Patent Office

Office européen des brevets

(11) Publication number: **0 320 562 B1**

## EUROPEAN PATENT SPECIFICATION

(45) Date of publication of patent specification: **12.05.93**   (51) Int. Cl.⁵: **H04N 3/12, G09G 3/36**

(21) Application number: **88103093.6**

(22) Date of filing: **01.03.88**

(54) **Liquid crystal color television.**

(30) Priority: **04.12.87 JP 305540/87**

(43) Date of publication of application:
**21.06.89 Bulletin 89/25**

(45) Publication of the grant of the patent:
**12.05.93 Bulletin 93/19**

(84) Designated Contracting States:
**DE FR GB NL**

(56) References cited:
**EP-A- 0 158 366**
**EP-A- 0 167 408**
**EP-A- 0 186 086**
**GB-A- 2 162 674**

**IEEE TRANSACTIONS ON CONSUMER ELEC-
TRONICS, vol. CE-31, no. 1, February 1985,
pages 39-45, IEEE, New York, US; M.
YAMANO et al.: "The 5- inch size full color
liquid crystal television addressed by
amorphous silicon thin film transistors"**

(73) Proprietor: **Stanley Electric Co., Ltd.**
**2-9-13, Nakameguro**
**Meguro-ku Tokyo 153(JP)**

(72) Inventor: **Akiyama, Ryoichi**
**c/o Kajigayaso 206 19-1 Suenaga**
**Takatsu-ku Kawasaki-shi**
**Kanagawa-ken(JP)**

(74) Representative: **Flach, Dieter Rolf Paul,
Dipl.-Phys. et al
Patentanwälte Andrae/Flach/Haug/Kneissl
Prinzregentenstrasse 24
W-8200 Rosenheim (DE)**

EP 0 320 562 B1

## Description

The invention relates to a liquid crystal color display device in accordance with the precharacterizing portion of claim 1.

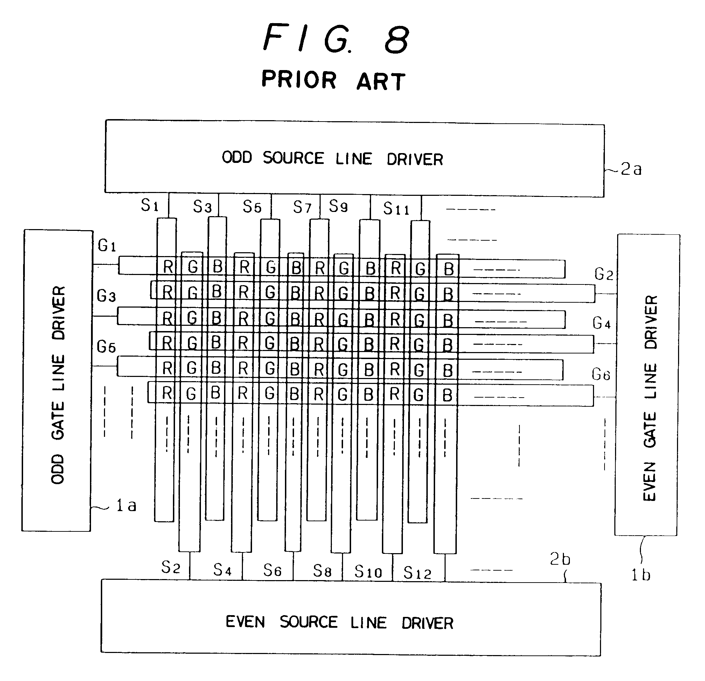

A known liquid crystal color display device as later on discussed with regard to figure 8 comprises a set of red, green and blue color filters covering the pixel mosaic fashion. Each pixel is driven by a thin-film transistor (TFT), the source of each transistor being connected to a source line, and the gate of each transistor being connected to a gate line.

For a better understanding of a liquid crystal color display device with regard to the prior art it is now referred to figure 8.

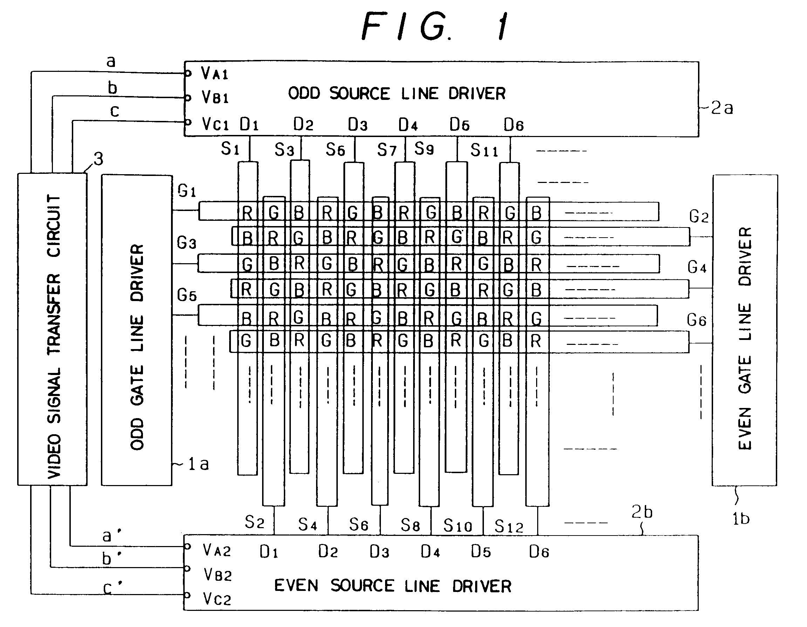

In Figur 8, 1a, 1b denote an odd gate line driver and an even gate line driver for driving odd gate lines $G_1$, $G_3$,... ... and even gate lines $G_2$, $G_4$ ... ... of the aformentioned TFT-transistor respectively, 2a, 2b denote an odd source line driver and an even source line driver for driving odd source lines $S_1$, $S_3$, ... ... and even source lines $S_2$, $S_4$, ... ... of the TFT-transistor respectively, and a pixel is formed at each intersection of each gate and each source line. Then, R, G, B color filters are arrayed in a stripe pattern on the pixels as illustrated.

In a liquid crystal color TV having a LCD panel contructed as above, an odd field component of TV signals is driven by an odd gate, and an even field component is driven by an even gate. Then, signals ($D_1$, $D_2$, ... ...) having amplified video signals to a predetermined voltage (capable of driving the liquid crystal) are fed to each pixel through a source line, thus displaying a color picture on LCD panel.

This well-known liquid crystal color display device further comprises a gate line driver with an odd gate line driver for sequentially selecting alternate gate lines of the set of gate lines and an even gate line driver for sequentially selecting alternate gate lines which are situated between the gate lines driven by the odd gate line driver. The source line driver further comprises an odd source line driver for connected inputs from the video signal transfer circuit to alternate source lines of the set of source lines in sequence and an even source line driver for connecting inputs from the video signal transfer circuit to alternate source lines in sequence. These source lines being situated between the source lines driven by the odd source line driver.

In EP-B1 0 167 408 a liquid crystal color display device is disclosed which is similar to the prior art in accordance with fig. 8.

From the publication "IEEE Transactions on Consumer Electronics, vol. Ce-31, no. 1, Feb. 1985, pp. 39 to 45" it is also known that a liquid crystal color display device comprises the separation of drivers into even and odd drivers, similarly as discussed with regard to the prior art as shown in figure 8.

With regard to the prior art, no problem may arise where an array pattern of color filters is stripe-like, but if the color filters are arrayed mosaically in the manner shown in Figure 1, the order of R, G, B changes accordingly to a selected gate line, and thus the LCD panel cannot be driven. This problem to be solved by this invention is to avoid this drawback. The problem is solved by the features as incorporated in the main claim. Prefered embodiments of the inventions are claimed in the subclaims.

In accordance with the invention the video signal transfer circuit comprises a plurality of multiplexers controlled by the digital control signal. The multiplexers are controlled such that each of the three outputs of the video signal transfer circuit may correspond to signals represented by any of the colors red, green or blue chrominance signals. Additionally the source line drivers comprise switches for connecting a first, second and third of the three driver input signals to the (3n)th, the (3n + 1)th, the (3n + 2)th source line respectively of the source lines. Switches are activated in sequence of the outputs of a shift register, whereby a signal of the correct colors output to each of the source lines is depending upon the gate line which is presently selected.

By this design even mosaic patterns are exactly ON/OFF switched. This operation was impossible by the conventional row or column control process.

One preferred embodiment of the invention will now be described with reference to the accompanying drawings. The figures are showing:

Figure 1:     a schemating block diagram of a LCD panel for a liquid crystal color display device relating to the invention;

Figure 2 :     a detailed drawing showing the interior of the panel of Figure 1;

Figure 3 :     a concrete circuit diagram of a video signal transfer circuit;

Figure 4a, b :     block diagrams showing in detail a multiplexer as used in Figure 3;

Figure 5 :     a waveform drawing showing a sampling timing of chrominance signal;

Figure 6 :     a block diagram showing in detail a source line driver;

Figure 7a, b :     time charts showing a transfer mode of chrominance signals;

Figure 8 :     a block diagram showing a liquid crystal color display device in accordane with the prior art.

Fig. 1 shows a schematic construction of a liquid crystal color display device which is hereinafter sometimes defined as LCD panel. The LCD panel comprises an odd gate line driver 1a, an even gate line driver 1b, an odd source line driver 2a and an even source line driver 2b, as in the case of the prior art. Further the LCD panel comprises a matrix array of pixels in which each pixel is driven by a thin-film transistor (TFT), whereby the source of each transistor 4 is connected to a source line $S_1$, $S_2$, ... ... and the gate of each transistor 4 is connected to a gate line $G_1$, $G_2$, ... ...

R, G, B color filters 5, each of them forming a pixel, are arrayed mosaically as illustrated, whereby each pixel is driven by a thin-film transistor 4. The source of each transistor 4 is connected to a sourse line lines $S_1$, $S_2$, ... ... and the gate of each transistor 4 being connected to a gate line $G_1$, $G_2$, ... ..., so that the intersections of gate lines and source lines are forming each pixel. Further a video signal transfer circuit 3 is provided for sampling and transferring each chrominance signal of R, G, B separated from a video signal at a predetermined period at every horizontal scanning time and also for every field. The video signals are applied to the video signal transfer circuit 3. From these video signals the chrominance signals a, b, c and a', b', c' are separated and output from the transfer circuit 3 as well as fed to the source line drivers 2a, 2b via input terminals $V_{A1}$, $V_{B1}$, $V_{C1}$, $V_{A2}$, $V_{B2}$, $V_{C2}$ respectively. Thus each liquid crystal cell is driven in a matrix fasion.

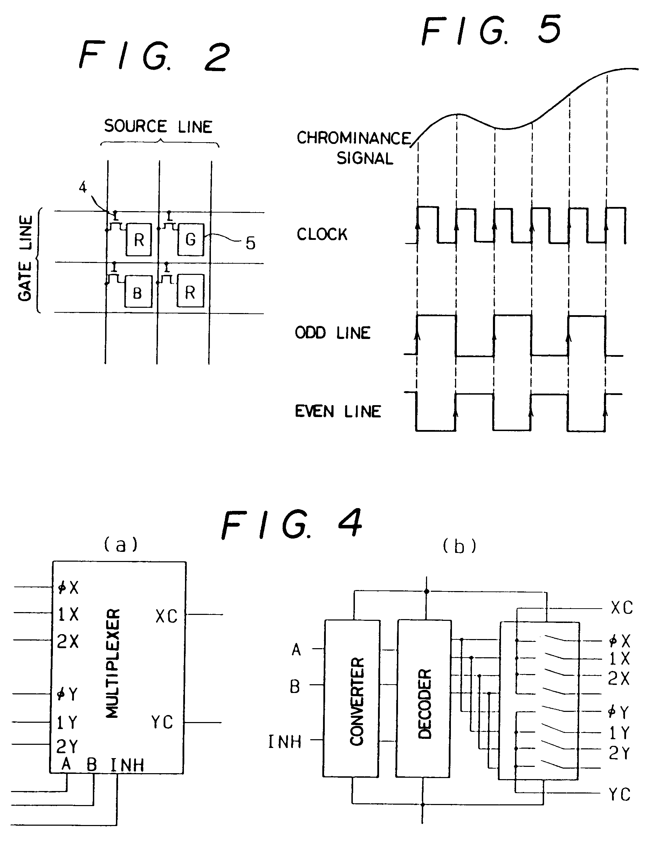

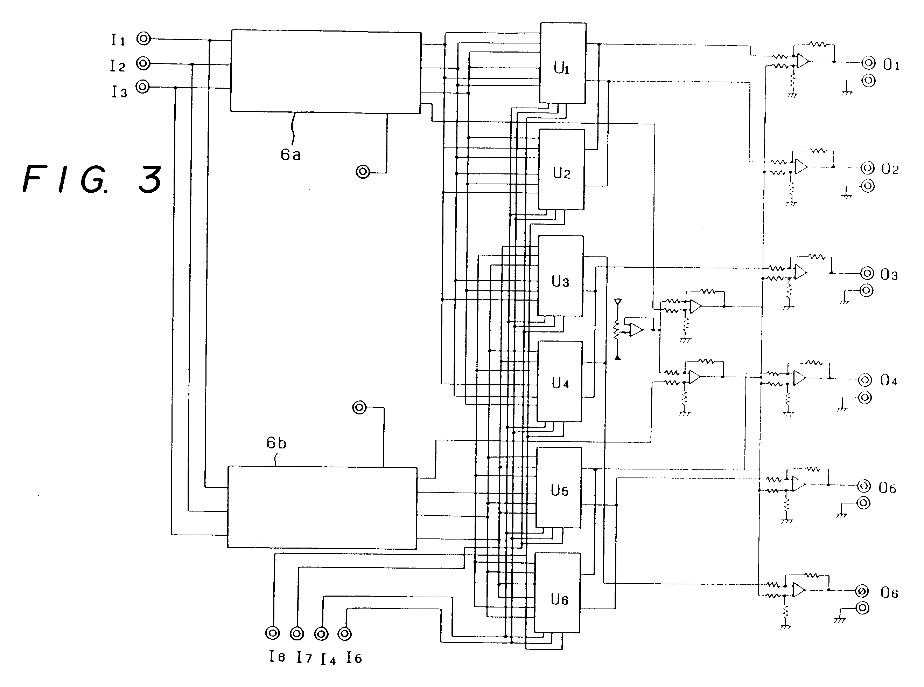

Figur 2 is a drawing showing a construction of the interior of the aforementioned panel in detail. As described above, TFT-transistor 4 and R, G, B color filters 5 are arrayed on each pixel at the intersection of each gate line $G_1$, $G_2$, ... ... and each source line $S_1$, $S_2$, ... ..., and each liquid crystal display cell is driven in a matrix fashion.

Figur 3 shows a concrete circuit diagram of the video signal transfer circuit 3. The circuit 3 is provided with amplifiers 6a, 6b for amplifying each chrominance signal of R, G, B (the signals separated from the video signals) inputted from input terminals $I_1$ to $I_3$ to a predetermined voltage, namely a voltage capable of driving the liquid crystals, six multiplexers $U_1$ to $U_6$ for transferring analog signals output from the amplifiers 6a, 6b, and the multiplexers $U_1$ to $U_6$ are controlled on a 2-bit control signal from input terminals $I_4$, $I_5$ and INHIBIT signal from input terminals $I_6$, $I_7$. The aforementioned 2-bit control signal becomes an output signal from a ternary counter concretely. Then, each chrominance signal of R. G. B can be transferred and output to the source line drivers 2a, 2b of Fig. 1 from output terminals $O_1$ to $O_6$. Each multiplexer $U_1$ to $U_6$ is shown in detail in Fig. 4. The multiplexer comprises a converter for converting a logic level of output signals (A, B) of the aforementioned ternary counter and INHIBIT signal (INH), a decoder and a switch unit.

The function will be described hereinafter.

Each chrominance signal of R, G, B (which is separated from the video signals) is input to the source line drivers 2a, 2b via the video signal transfer circuit 3, sampled at every three lines here and then fed to each source line. For example, signals input from the terminals $V_{A1}$, $V_{A2}$ are sampled at every $3n - 2$ (n = 1, 2 ... ...) lines and then output. Further, chrominance signals input from the terminals $V_{B1}$, $V_{B2}$ are sampled at every $3n - 1$ lines, and signals input from $V_{C1}$, $V_{C2}$ are sampled at every $3n$ lines and then output. In this case, the source lines are divided into odd lines and even lines to lower a sampling frequency, and sampling clocks are assigned half each as shown in Fig. 5.

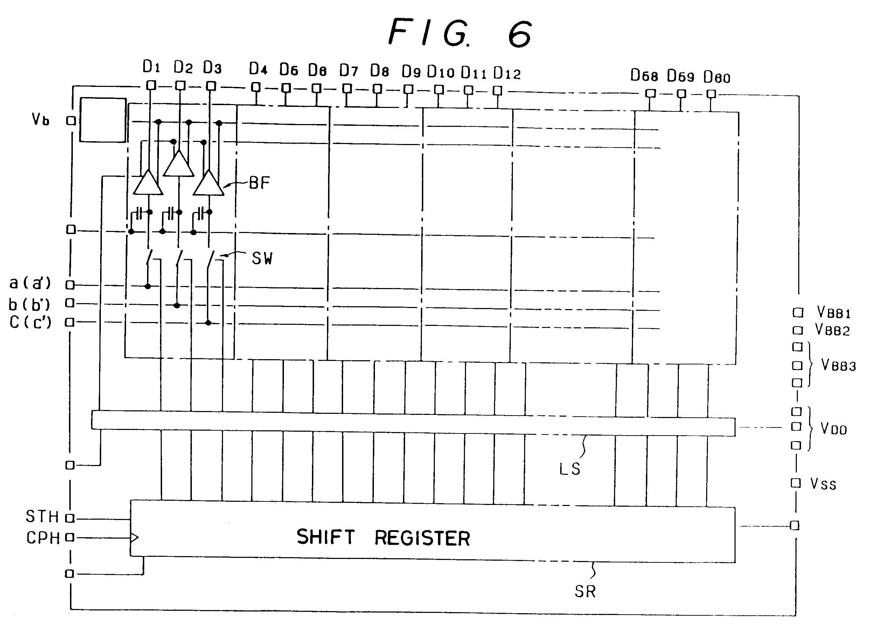

Fig. 6 shows the source line drivers 2a, 2b in detail. As described above the signals a, b, c from the video signal transfer circuit 3 which are amplified to a voltage capable of driving the liquid crystals are sampled by a buffer BF. In this case, a switch SW is operated every time a data (horizontal scanning start pulse) STH is shifted by a 60-bit shift register SR on a shift clock CPH, and the signals a, b, c (a', b', c') are fed to the buffer BF for sampling. The switch SW is provided correspondingly to each chrominance signal in this case, and outputs ($D_1$, $D_2$, ... ...) of the circuit are also coordinated with inputs (a, b, c, a', b', c'), thus relating as $a(a') = D_{3n-2}$, $b(b') = D_{3n-1}$, $c(c') = D_{3n}$. Then in the drawing, LS denotes a level shifter, PS denotes a power unit capable of adjusting a luminance of the liquid crystals, and a plurality of powers ($V_b$, $V_{BB1}$ to $V_{BB3}$, $V_{DD}$, $V_{SS}$) different in voltage are fed externally to the circuit.

With reference to a relation between the electrode connection of each pixel and the color filter 5, as shown in Fig. 1 or 2, when a gate line $G_1$ is turned on in the odd field, outputs $D_1$, $D_4$, ... ... $D_{3n-2}$ on source side must be R signals on the odd source line driver 2a, outputs $D_2$, $D_5$, ... ... $D_{3n-1}$ must be B signals, outputs $D_3$, $D_6$, ... ... $D_{3n}$ must be G signals, and also outputs $D_{3n-2}$ must be G signals on the even source line driver 2b, outputs $D_{3n-1}$ must be R signals and outputs $D_{3n}$ must be B signals. Thus, signals R, B, G are inputted to a terminal $V_{A1}$ of the odd source line driver 2a, a terminal $V_{B1}$ and a terminal $V_{C1}$ respectively, while signals G, R, B are inputted to a terminal $V_{A2}$ of the even source line driver 2b, a terminal $V_{B2}$ and a terminal $V_{C2}$ respectively. Thus, signals proper for each color filter can be fed to each pixel. However,

a gate line $G_3$ will be turned on at the next horizontal scanning time, therefore signals corresponding thereto must be fed to each terminal of the source line drivers 2a, 2b. That is, feed signals must be transferred properly so as to secure signals a = G signal, b = R signal, c = B signal, and also a' = B signal, b' = G signal, c' = R signal. Further, these must be transferred likewise at the next horizontal scanning time, and then the three combined states must be transferred in order from the next horizontal scanning time on. Then, in the even field, combined states different from the aforementioned three combined states of the odd field must also be transferred in order.

Now, in the embodiment, signals R, G, B are transferred on the video signal transfer circuit 3 shown in Fig. 3. That is, the circuit has 2−bit control signals A, B and an inhibit signal inputted by six analog multiplexers $U_1$ to $U_6$, and controls two sets of 3 channels on a 2−bit signal. To describe concretely, it is necessary that the signals a, b, c and a', b', c' be any of the signals R, G, B, as described hereinbefore, at every horizontal scanning time and also at every field, and thus outputs of the ternary counter are inputted to the multiplexers $U_1$ to $U_6$ as the control signals A, B. In this case, however, a source signal corresponding to the gate line $G_1$ is fed at the horizontal scanning time before the first gate line $G_1$ is turned on, therefore a display action starts before the gate line $G_1$ is turned on.

In the multiplexers $U_1$ to $U_6$, when the control signals A, B become "L" (low level), $\phi$X terminal and XCOM terminal (common terminal), $\phi$Y terminal and YCOM terminal shown in Fig. 4 (b) get conductive, therefore signals R, B and G are inputted to $\phi$X terminal and $\phi$Y terminal of the multiplexer $U_1$ and $\phi$Y terminal of the multiplexer $U_3$ respectively. Then, in the odd field, the inhibit signal inputted to the multiplexers $U_1$, $U_3$, $U_5$ is retained to "L" to keep the multiplexers $U_1$, $U_3$, $U_5$ active, and the inhibit signal inputted to the multiplexers $U_2$, $U_4$, $U_6$ is kept at "H" (high level) to get outputs high in impedance. Thus, the signals are fed as a = R signal, b = B signal, c = G signal, and a' = G' signal, b' = R' signal, c' = B' signal. At the next horizontal scanning time, the control signals A and B are kept at "H" and "L" respectively, and 1X terminal and XCOM terminal, 1Y terminal and YCOM terminal of the multiplexers $U_1$ to $U_6$ are conductive each, therefore the signals G and R are inputted to 1X terminal and 1Y terminal of the multiplexer $U_1$ respectively, the signals B and R' are inputted to 1Y terminal and 1X terminal of the multiplexer $U_3$, and the signals B and G are inputted to 1X terminal and 1Y terminal of the multiplexer $U_5$ respectively. Accordingly, since the inhibit signal is unchanged, the signals are fed as a

= G signal, b = R signal, c = B signal, and a' = B' signal, b' = G' signal and c' = R' signal. Then, at the next horizontal scanning time, the control signals A and B are kept at "L" and "H" respectively, 2X terminal and XCOM terminal, 2Y terminal and YCOM terminal of the multiplexers $U_1$ to $U_6$ are conductive each, and thus the signals are fed likewise as a = B signal, b = G signal, c = R signal, and a' = R' signal, b' = B' signal and c' = G' signal. Further at the next horizontal scanning time, since the control signals A, B are output signals of the ternary counter, the signals A, B are kept at "L" both, and the aforementioned operation is repeated.

In the even field, on the other hand, with the inhibit signal inputted to the multiplexers $U_1$, $U_3$, $U_5$ at "H" and the inhibit signal inputted to the multiplexers $U_2$, $U_4$, $U_6$ at "L", the multiplexers $U_1$, $U_3$, $U_5$ are kept at high impedance and the multiplexers $U_2$, $U_4$, $U_6$ are kept active, and the three−way combinations are repeated likewise. Thus, in LCD panel having color filters 5 arrayed mosaically as shown in Fig. 1, signals corresponding to colors of the filters 5 can be fed, and a color picture can be displayed accordingly.

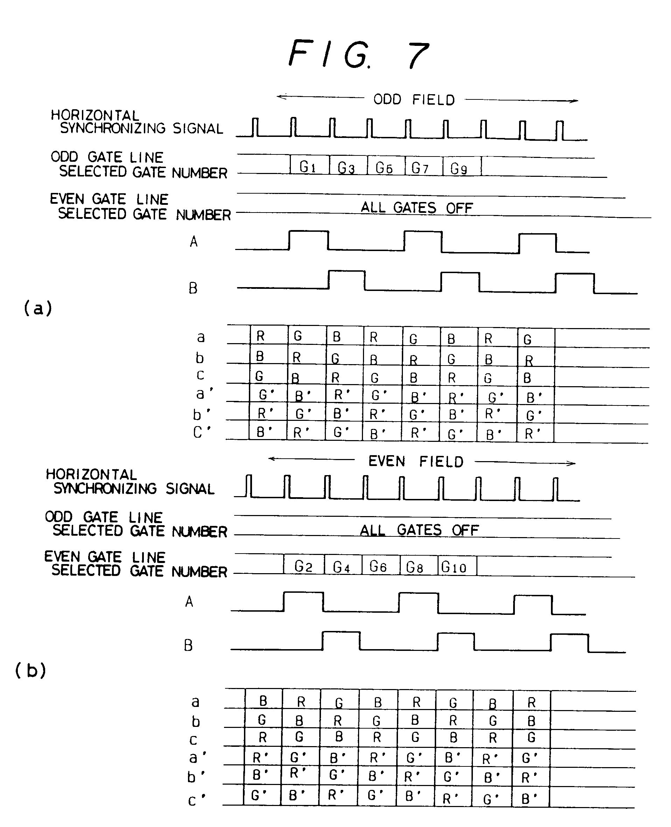

Fig. 7 (a) and (b) are time charts showing a mode wherein signals in the aforementioned odd field and even field are transferred. As illustrated, each gate line is selected at rise of a horizontal synchronizing pulse, and signals R, G, B (R', G', B') are fed at every field.

As described, LCD panel of interlacing drive can be driven through a simple construction utilizing analog multiplexers, and a predetermined color picture is obtainable even in case color filters are arrayed in a mosaic pattern. Then, an array other than the mosaic patter is also available by changing the order of video signals inputted to each multiplexer.

As described above, according to the invention, since a video signal transfer circuit for sampling and transferring each chrominance signal of R, G, B which is separated from video signals at a predetermined period at every horizontal scanning time and also at every field is provided, a predetermined color picture is obtainable through driving LCD panel of interlacing drive even in case R, G, B color filters are arrayed mosaically.

**Claims**

1. A liquid crystal colour display device comprising
   − a matrix array of pixels, a set of source lines ($S_1$, $S_2$, ...) and a set of gate lines ($G_1$, $G_2$, ...) orthogonal to the said source lines ($S_1$, $S_2$, ...), in which each pixel is driven by a thin−film transistor (4), the source of each transistor (4) being connected to a source line ($S_1$, $S_2$, ...), and the gate of each transistor (4) being connected to a gate line ($G_1$, $G_2$, ...)

– a set of red, green, and blue colour filters (5) covering the pixels in a mosaic fashion such that horizontally adjacent and vertically adjacent pixels are covered by mutually different coloured filters, in a repetetive pattern

– a video signal transfer circuit (3) receiving as inputs video signals for supplying three output chrominance signals (a, b, c) representing the coulours red, green and blue to each of an odd source line driver (2a) and an even source line driver (2b)

– a gate line driver comprising an odd gate line driver (1a) for sequentially selecting alternate gate lines ($G_1$, $G_3$, ...) of the set of gate lines ($G_1$, $G_2$, ...) and an even gate line driver (1b) for sequentially selecting alternate gate lines ($G_2$, $G_4$ ...) which are situated between the gate lines ($G_1$, $G_3$, ...)driven by the odd gate line driver (1a)

– the source line driver comprising an odd source line driver (2a) for connecting inputs from the video signal transfer circuit (3) to alternate source lines ($S_1$, $S_3$, ...) of the set of source lines ($S_1$, $S_2$, ...) in sequence and an even source line driver (2b) for connecting inputs from the video signal transfer circuit (3) to alternate source lines ($S_2$, $S_4$, ...) in sequence, the source lines ($S_2$, $S_4$, ...) driven by the even source line driver being situated between the source lines ($S_1$, $S_3$, ...) driven by the odd source line driver (2a)

**characterized in that**

– the video signal transfer circuit (3) comprises a plurality of multiplexers ($U_1$ – $U_6$) controlled by a digital control signal, the multiplexers ($U_1$ – $U_6$) being controlled such that each of three output lines of the video signal transfer circuit (3) connected to a first, second and third input line respectively of the odd source line driver (2a) and each of three output lines of the video signal transfer circuit (3) connected to a first, second and third input line respectively of the even source line driver (2b) is selected to convey one of the chrominance signals, the chrominance signal which a given output line is selected to convey being cyclically varied

– the source line drivers (2a, 2b) comprise switches (SW) for connecting the first, second and third of the three driver input lines to the (3n)th, the (3n + 1)th, the (3n + 2)th source line respectively of the source lines ($S_1$, $S_2$, ...) to be driven by that driver (2a, 2b), where n is a natural number, the switches (SW) being activated in sequence by the outputs of a shift register (SR), whereby a chrominance signal representing the correct colour is output to each of the source lines ($S_1$, $S_2$, ...) in dependence upon the gate line ($G_1$, $G_2$, ...) which is presently selected.

2. A liquid crystal colour display device in accordance with claim 1, **characterized in that** the multiplexers ($U_1$ – $U_6$) are controlled by a 2-bit control signal from input terminals ($I_4$, $I_5$) and a 2-bit INHIBIT-Signal from input terminals ($I_6$, $I_7$).

3. A liquid crystal colour display device in accordance with claim 1 or 2, **characterized in that** the 2-bit control signal ($I_4$, $I_5$) is an output signal from a ternary counter.

4. A liquid crystal colour device in accordance with at least one of the claims 1 to 3, **characterized in that** the outputs a first and a second group of three multiplexers ($U_1$ – $U_3$; $U_4$ – $U_6$) are connected with the odd source line driver (2a) or the even source line drivers (2b), respectively.

5. A liquid crystal colour device in accordance to claim 1, **characterized in that** each source line driver (2a, 2b) controls sampling of the chrominance signals input thereto (red, green, blue) via a shift register (SR) which activates the switches (SW).

**Patentansprüche**

1. Flüssigkristall-Farbanzeigevorrichtung, aufweisend

– ein Matrixfeld von Pixeln, eine Gruppe von Quellenzeilen ($S_1$, $S_2$, ...) und eine Gruppe von Gate-Zeilen ($G_1$, $G_2$, ...), die zu den Quellenzeilen ($S_1$, $S_2$, ...) orthogonal sind, wobei jedes Pixel durch einen Dünnfilm-Transistor (4) angetrieben ist, die Quelle jedes Transistors (4) verbunden ist mit einer Quellenzeile ($S_1$, $S_2$, ...) und das Gate jedes Transistors (4) mit Gate-Zeile ($G_1$, $G_2$, ...) verbunden ist,

– eine Gruppe von roten, grünen und blauen Farbfiltern (5), die die Pixel in Mosaikart so abdecken, daß horizontal benachbarte und vertikal benachbarte Pixel durch gegenseitig verschiedene gefärbte Filter abgedeckt sind, und zwar in einem sich wiederholenden Muster,

– eine Videosignal – Übertragungsschaltung (3), die als Eingänge Videosignale auf – nimmt zum Zuführen von drei Ausgangs – Chrominanzsignalen (a, b, c), die die Farben rot, grün und blau darstellen, zu einem ungradzahligen Quellenzeilen – Treiber (2a) und einem gradzahligen Quellenzeilen – Treiber (2b),

– einen Gate – Zeilen – Treiber, der einen ungradzahligen Gate – Zeilen – Treiber (1a) aufweist zum sequentiellen Aus – wählen von abwechselnden Gate – Zeilen $(G_1, G_3, ...)$ der Gruppe von Gate – Zeilen $(G_1, G_2, ...)$ und einen gradzahligen Gate – Zeilen – Treiber (1b) zum se – quentiellen Auswählen von abwechseln – den Gate – Zeilen $(G_2, G_4, ...)$, die zwi – schen den Gate – Zeilen $(G_1, G_3, ...)$ ge – legen sind, die durch den ungradzahligen Gate – Zeilen – Treiber (1a) angetrieben sind,

– wobei der Quellenzeilen – Treiber einen ungradzahligen Quellenzeilen – Treiber (2a) aufweist zum Verbinden von Ein – gängen von der Videosignal – Übertra – gungsschaltung (3) mit abwechselnden Quellenzeilen $(S_1, S_3, ...)$ der Gruppe von Quellenzeilen $(S_1, S_2, ...)$ in Sequenz und einen gradzahligen Quellenzeilen – Trei – ber (2b) zum Verbinden von Eingängen von der Videosignal – Übertragungs – schaltung (3) mit abwechselnden Quel – lenzeilen $(S_2, S_4, ...)$ in Sequenz, wobei die Quellenzeilen $(S_2, S_4, ...)$, die durch den gradzahligen Quellenzeilen – Treiber angetrieben sind, zwischen den Quel – lenzeilen $(S_1, S_3, ...)$ gelegen sind, die durch den ungradzahligen Quellenzeilen – Treiber (2a) angetrieben sind,

dadurch gekennzeichnet,

– daß die Videosignal – Übertragungs – schaltung (3) eine Vielzahl von Multiple – xern $(U_1 – U_6)$ aufweist, die durch ein digitales Steuersignal gesteuert sind, wobei die Multiplexer $(U_1 – U_6)$ derart gesteuert sind, daß jede von drei Aus – gangszeilen der Videosignal – Übertra – gungsschaltung (3), die jeweils mit einer ersten, zweiten und dritten Eingangszeile des ungradzahligen Quellenzeilen – Treibers (2a) verbunden ist und jede von drei Ausgangszeilen der Videosignal – Übertragungsschaltung (3), die jeweils mit einer ersten, zweiten und dritten Eingangszeile des gradzeiligen Quellenzeilen – Treibers (2b) verbunden ist, ausgewählt ist, um eines der Chro – minanzsignale zu leiten, wobei das Chrominanzsignal, das eine gegebene Ausgangszeile ausgewählt ist zu leiten, zyklisch variiert ist,

– die Quellenzeilen – Treiber (2a, 2b) Schalter (SW) aufweisen zum Verbinden der ersten, zweiten und dritten der drei Treibereingangszeilen jeweils mit der (3n) ten, der (3n + 1)ten, der (3n + 2) – ten Quellenzeile der durch den Treiber (2a, 2b) anzutreibenden Quellenzeilen $(S_1, S_2, ...)$, wobei n eine natürliche Zahl ist, wobei die Schalter (SW) in Sequenz durch die Ausgänge eines Schieberegi – sters (SR) aktiviert werden, wobei ein Chrominanzsignal, das die korrekte Farbe darstellt, an jede der Quellenzeilen $(S_1, S_2, ...)$ in Abhängigkeit von der Gate – Zeile $(G_1, G_2, ...)$ ausgegeben wird, welche gegenwärtig gewählt ist.

2. Flüssigkristall – Farbanzeigevorrichtung gemäß Anspruch 1, dadurch gekennzeichnet, daß die Multiplexer $(U_1 – U_6)$ durch ein 2 – Bit – Steuersignal von Eingangsanschlüssen $(I_4, I_5)$ und ein 2 – Bit – Hemmsignal von Eingangs – anschlüssen $(I_6, I_7)$ gesteuert werden.

3. Flüssigkristall – Farbanzeigevorrichtung gemäß Anspruch 1 oder 2, dadurch gekennzeichnet, daß das 2 – Bit – Steuersignal $(I_4, I_5)$ ein Aus – gangssignal von einem ternären Zähler ist.

4. Flüssigkristall – Farbanzeigevorrichtung nach wenigstens einem der Ansprüche 1 bis 3, da – durch gekennzeichnet, daß die Ausgänge einer ersten und einer zweiten Gruppe von drei Multiplexern $(U_1 – U_3; U_4 – U_6)$ mit dem ungradzahligen Quellenzeilen – Treiber (2a) bzw. den gradzahligen Quellenzeilen – Treibern (2b) verbunden sind.

5. Flüssigkristall – Farbanzeigevorrichtung nach Anspruch 1, dadurch gekennzeichnet, daß je – der Quellenzeilen – Treiber (2a, 2b) das Abta – sten der darin eingegebenen Chrominanzsi – gnale (rot, grün, blau) über ein Schieberegister (SR) steuert, welches die Schalter (SW) akti – viert.

## Revendications

1. Dispositif d'affichage en couleur à cristaux liquides, comprenant:
   - une disposition en matrice de pixels, un ensemble de lignes de source ($S_1$, $S_2$, ...) et un ensemble de lignes de porte ($G_1$, $G_2$, ...) orthogonales auxdites lignes de source ($S_1$, $S_2$, ...), dans lequel chaque pixel est commandé par un transistor à film mince (4), la source de chaque transistor (4) étant connectée à une ligne de source ($S_1$, $S_2$, ...) et la porte de chaque transistor (4) étant connectée à une ligne de porte ($G_1$, $G_2$, ...)
   - un ensemble de filtres de couleur rouge, vert et bleu (5) couvrant les pixels suivant un motif en mosaïque, de façon à ce que les pixels horizontalement voisins et verticalement voisins soient recouverts par des filtres colorés différents l'un de l'autre, suivant un motif répétitif
   - un circuit de transfert de signaux vidéo (3) recevant comme entrée des signaux vidéo pour fournir trois signaux de chrominance de sortie (a, b, c) représentant les couleurs rouge, vert et bleu à une commande de ligne de source impaire (2a) et à une commande de ligne de source paire (2b)
   - une commande de ligne de porte comprenant une commande de ligne de porte impaire (1a) pour choisir séquentiellement des lignes de porte alternées ($G_1$, $G_3$, ...) de l'ensemble de lignes de porte ($G_1$, $G_2$, ...) et une commande de lignes de porte paire (1b) pour choisir séquentiellement les lignes de porte alternées ($G_2$, $G_4$, ...) qui sont situées entre les lignes de porte ($G_1$, $G_3$, ...) commandées par la commande de lignes de porte impaire (1a)
   - la commande de ligne de source comprenant une commande de ligne de source impaire (2a) pour connecter les signaux d'entrée provenant du circuit de transfert des signaux vidéo (3) aux lignes de source alternées ($S_1$, $S_3$, ...) de l'ensemble des lignes de source ($S_1$, $S_2$, ...) de manière séquentielle et une commande de ligne de source paire (2b) pour connecter les signaux d'entrée provenant du circuit de transfert de signaux vidéo (3) aux lignes de source alternées ($S_1$, $S_4$, ...) de manière séquentielle, les lignes de source ($S_2$, $S_4$, ...) commandées par la commande de lignes de source paire étant situées entre les lignes de source ($S_1$, $S_3$, ...) commandées par la commande de lignes de source impaire (2a),
   caractérisé en ce que
   - le circuit de transfert de signaux vidéo (3) comprend plusieurs multiplexeurs ($U_1$ – $U_6$) contrôlés par un signal de contrôle numérique, les multiplexeurs ($U_1$ – $U_6$) étant contrôlés de façon à ce que chacune des trois lignes de sortie du circuit de transfert de signaux vidéo (3) connectées à une première, deuxième et troisième ligne d'entrée respectivement de la commande de lignes de source impaire (2a) et chacune des trois lignes de sortie du circuit de transfert de signaux vidéo (3) connectée à une première, une deuxième et une troisième ligne d'entrée respectivement de la commande de ligne de source paire (2b) sont choisies pour transporter l'un des signaux de chrominance, le signal de chrominance qui, pour une ligne de sortie donnée, est choisi pour transporter, étant modifié de manière cyclique
   - les commandes de ligne de source (2a, 2b) comprennent des commutateurs (SW) pour connecter la première, la deuxième et la troisième des trois lignes d'entrée de commande aux lignes de source d'ordre ($3n$), ($3n+1$) et ($3n+2$) respectivement, des lignes de source ($S_1$, $S_2$, ...) à entraîner par cette commande (2a, 2b), où n est un nombre naturel, les commutateurs (SW) étant activés séquentiellement par les sorties d'un registre de décalage (SR), alors qu'un signal de chrominance représentant la couleur correcte est amené à chacune des lignes de source ($S_1$ $S_2$, ...) en fonction de la ligne de porte ($G_1$, $G_2$, ...) qui est choisie à ce moment.

2. Dispositif d'affichage en couleur à cristaux liquides selon la revendication 1, caractérisé en ce que les multiplexeurs ($U_1$ – $U_6$) sont contrôlés par un signal de contrôle à deux bits provenant des bornes d'entre ($I_4$, $I_5$) et par un signal d'inhibition à deux bits provenant des bornes d'entrée ($I_6$, $I_7$).

3. Dispositif d'affichage en couleur à cristaux liquides selon la revendication 1 ou 2, caractérisé en ce que le signal de contrôle à deux bits ($I_4$, $I_5$) est un signal de sortie provenant d'un compteur ternaire.

4.  Dispositif de couleur à cristaux liquides selon au moins l'une des revendications 1 à 3, caractérisé en ce que les sorties d'un premier et d'un deuxième groupe de trois multiplexeurs ($U_1 - U_3$; $U_4 - U_6$) sont connectés à la commande de ligne de source impaire (2a) ou aux commandes de ligne de source paire (2b) respectivement.

5.  Dispositif de couleur à cristaux liquides selon la revendication 1, caractérisé en ce que chaque commande de ligne de source (2a, 2b) contrôle l'échantillonnage de l'entrée à celle-ci des signaux de chrominance (rouge, vert, bleu) par l'intermédiaire d'un registre de décalage (SR) qui active les commutateurs (SW).

FIG. 1

*F I G. 2*

SOURCE LINE

GATE LINE

R G
B R

4
5

*F I G. 5*

CHROMINANCE SIGNAL

CLOCK

ODD LINE

EVEN LINE

*F I G. 4*

(a)

MULTIPLEXER

ØX
1X
2X
ØY
1Y
2Y
A B INH

XC
YC

(b)

CONVERTER
DECODER

A
B
INH

XC
ØX
1X
2X
ØY
1Y
2Y
YC

10

F I G. 3

EP 0 320 562 B1

# FIG. 6

EP 0 320 562 B1

# F I G. 7

# F I G. 8
## PRIOR ART